# EUROPEAN PATENT SPECIFICATION

(11) **EP 1 571 064 B1**
(45) Date of publication and mention of the grant of the patent: **29.07.2009**
(21) Application number: 05101563.4
(22) Date of filing: 01.03.2005
(51) Int. Cl.: B62D 1/22, G05G 1/30, B62D 1/18

(54) **Adjustable pedal and steering mechanism**
Einstellbarer Pedal- und Lenksäulemechanismus
Ensemble de pédale et de colonne de direction réglable

(30) Priority: 02.03.2004 IT TO20040130
(43) Date of publication of application: 07.09.2005
(73) Proprietor: ITALDESIGN-GIUGIARO S.p.A, 10121 Torino (IT)
(72) Inventor: De la Fuente, Manuel, 14024, Moncucco Torinese (Asti) (IT); Gai, Paolo, 10146, Torino (IT); Bono, Franco, 10024, Moncalieri (Torino) (IT)
(74) Representative: Rondano, Davide

(56) References cited:
- WO-A-90/15747
- DE-A1- 2 222 397
- DE-A1- 4 340 633
- DE-A1- 19 938 264
- GB-A- 771 706
- GB-A- 775 534
- GB-A- 1 460 027
- PATENT ABSTRACTS OF JAPAN vol. 005, no. 158 (M-091), 12 October 1981 (1981-10-12) & JP 56 086827 A (NISSAN SHATAI CO LTD), 15 July 1981 (1981-07-15)

## Description

The present invention relates to a control unit for a motor vehicle comprising an adjustable steering wheel and pedal assembly, according to the preamble of claim 1.

A control unit of the above-identified type is known from International Patent Application WO90/15747 and comprises a steering wheel and a pedal assembly carried by a support body which can be moved in the transverse direction of the motor vehicle so as to allow easily to modify the motor vehicle from a left-hand drive configuration to a right-hand configuration and vice versa. The support body can be moved from one side of the vehicle to the other by means of an electrically driven rack and pinion or worm and wheel mechanism.

DE 199 38 264 discloses a pedal assembly for a motor vehicle which is either mechanically or hydraulically coupled to an adjustable steering wheel so as to make it possible to adjust the position of the pedals depending on the position of the steering wheel. The adjustment movements of the pedal assembly and of the steering wheel are therefore linked to each other.
WO9015747 A discloses a control unit for a motor vehicle according to the preamble of claim 1.

It is an object of the present invention to provide an improved control unit for a motor vehicle with respect to the prior art discussed above, which is not only movable in the transverse direction but also adjustable in the other two spatial directions, thereby enabling drivers of any height to find an ergonomically correct drive position.

This and other objects are fully achieved according to the present invention by means of a control unit as defined in the characterising part of independent Claim 1.

The characteristics and advantages of the invention will become apparent from the detailed description which follows, given purely by way of non-limiting example with reference to the appended drawings, in which:
Figure 1 is a perspective view of a passenger compartment of a motor vehicle provided with a control unit according to a preferred embodiment of the invention;
Figure 2 is a front view of the control unit of Figure 1;
Figure 3 is a side elevation view of the control unit of Figure 1;
Figure 4 is a plan view from above of the control unit of Figure 1; and
Figure 5 is a front perspective view of a seat adapted to be used in a motor vehicle provided with a control unit according to the invention.

In the description and the claims which follow, terms such as "front" or "rear", "upper" or "lower", "longitudinal" or "transverse", are to be intended as referred to the mounted condition on the motor vehicle.

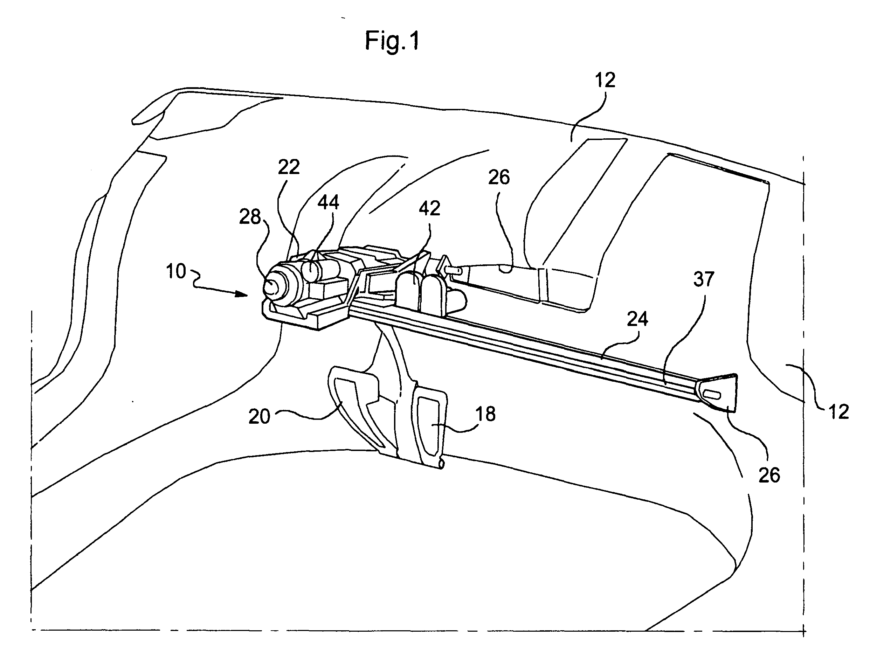

Referring first to Figures 1 to 4, a control unit for a motor vehicle according to the present invention is generally indicated 10 and is arranged to be mounted on a dashboard 12 of a passenger compartment of a motor vehicle.

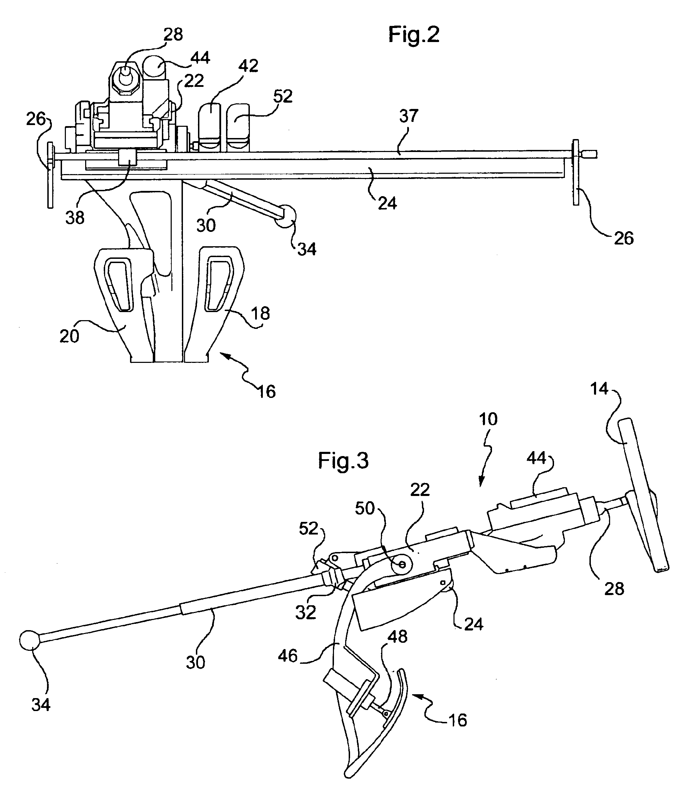

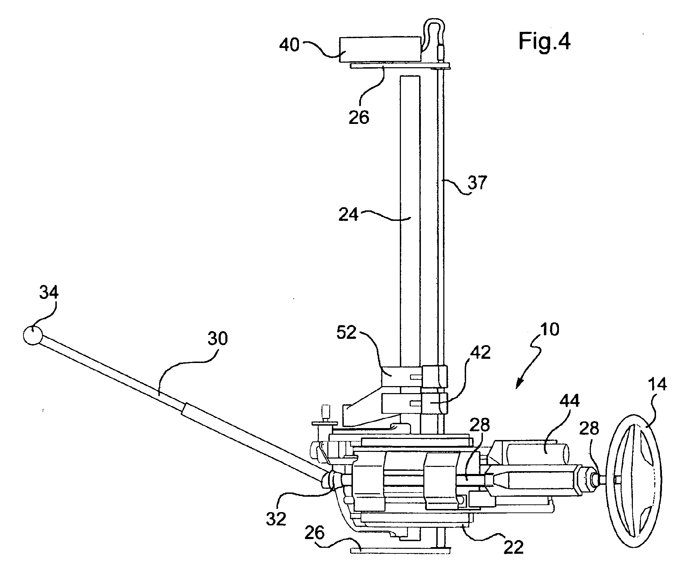

The control unit 10 comprises a steering wheel 14 (schematically shown in Figures 3 and 4) and a pedal assembly 16, which includes in the illustrated embodiment an accelerator pedal 18 and a brake pedal 20 (naturally a clutch pedal can also be included). The steering wheel 14 and the pedal assembly 16 are carried by a support body 22, which is mounted for sliding transversely along a cross-bar 24 attached at its ends to the dashboard 12, or to another part of the structure of the passenger compartment, for example by means of a pair of brackets 26.

The steering wheel 14 is fitted on a steering column 28 which is mounted on the support body 22 so that it can move along the direction of its own axis (to allow depth adjustment of the steering wheel) and tilt in a vertical longitudinal plane (to allow height adjustment of the steering wheel).

The steering column 28 is arranged to operate a steering box (not shown) via a telescopic transmission shaft 30, connected at a first end thereof to the steering column 28 through a first universal joint 32 and at the opposite end to the steering box through a second universal joint 34. In this way, the steering column 28, which is transversely movable together with the support body 22, can operate the steering box, which is on the contrary installed in a fixed position with respect to the motor vehicle, wherever it is along the cross-bar 24. In order to allow angular movement of the transmission shaft 30 resulting from transverse translation of the control unit 10, a transverse slot-like aperture 36 is provided in the dashboard 12 (Figure 1) through which the shaft 30 passes.

The control unit 10 (steering wheel 14 and pedal assembly 16) is continuously movable along the cross-bar 24 by means of a conventional actuation device comprising a worm 37, arranged parallel to the cross-bar 24 and preferably also mounted at its ends on the pair of brackets 26, and a nut screw 38 attached to the support body 22. The rotation of the worm 37 is controllable by a first actuator 40 (Figure 4), such as a conventional electric motor or gear motor, mounted for example on one of the two brackets 26 supporting the worm itself. As a result of the rotation of the worm 37, the nut screw 38 translates along the worm and draws with itself the support body 22 guided by the cross-bar 24. In this way, the control unit can be adjusted continuously in the transverse direction between a left-hand driving position (shown in the figures) and a right-hand driving position, passing through a central driving position.

A second and a third actuator 42 and 44, such as a conventional electric motor or gear motor, are also mounted on the support body 22 and are arranged to control axial movement (depth adjustment) and vertical movement (height adjustment) of the steering column 28. The mechanisms for actuating those adjustment movements will not be described in detail as of generally known type.

As can be observed in particular in the side elevation view of Figure 3, the pedal assembly 16, which comprises in this embodiment the accelerator pedal 18 and the brake pedal 20, is mounted at the lower end of a support arm 46. The pedals 18, 20 are articulated at their lower ends to the arm 46 and are connected each to the respective control unit by means of a control rod 48 (as the one shown in Figure 3 for controlling the brake pedal 20), or any other equivalent member. The support arm 46 is connected at its upper end to the support body 22 by articulation 50, so that it can tilt about a transverse axis and thus allow frontward and backward movement of the pedal assembly 16 (longitudinal adjustment). In order to control this tilting movement of the arm 46, there is provided a fourth actuator 52, for example a conventional linear electric actuator, which is mounted on the support body 22.

The actuators 40, 42, 44 and 52 controlling the various adjustment movements of the control unit 10 can be operated in per-se-known manner by suitable push-buttons or control switches (not shown) placed on the dashboard or directly on the control unit.

A control unit according to the invention thus offers the advantage of enabling the control devices of a motor vehicle (steering wheel and pedals) to be adjusted in the longitudinal, transverse and vertical directions. Thanks to this, it is also possible to dispense with the longitudinal and vertical adjustments of the driver's seat.

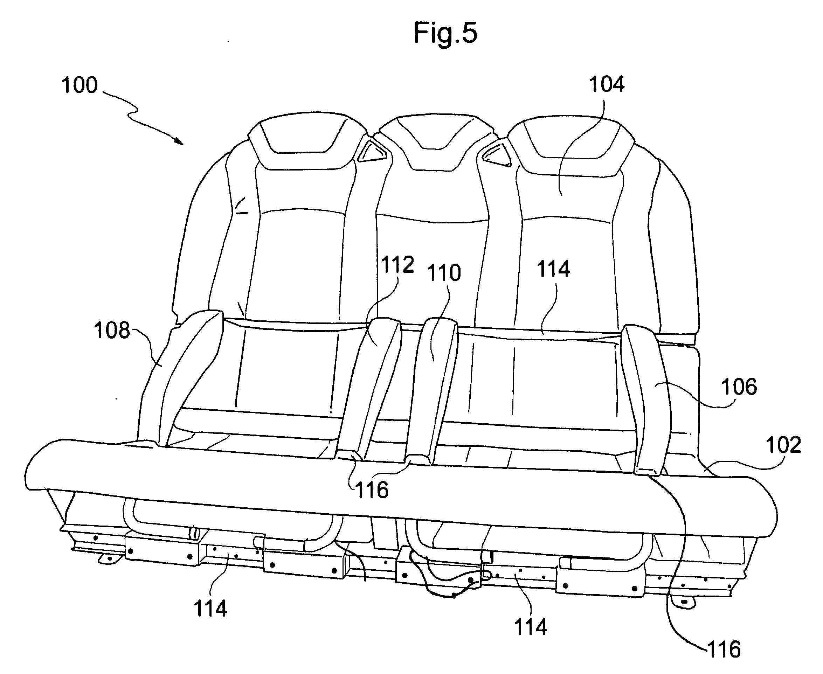

With reference to Figure 5 a motor-vehicle seat will be described now which is adapted to be used in a motor vehicle provided with a transversely adjustable control unit according to the present invention.

A motor-vehicle seat according to the invention is generally indicated 100 in Figure 5. The seat 100 comprises a seating portion 102 and a seat back 104 having width and shape such that at least two persons, that is the driver and at least one passenger, can be accommodated simultaneously. The seat back 104 is advantageously articulated to the seating portion 102 about a transverse axis, so that it can be adjusted in inclination.

In order comfortably to accommodate the driver independently of the transverse driving position (left-hand drive, right-hand drive or central drive), the seat 100 is provided with a pair of side armrests, that is, a left side armrest 106 and a right side armrest 108, respectively, and with a pair of middle armrests, that is, a left middle armrest 110 and a right middle armrest 112, respectively, which can be transversely moved along proper guides 114 mounted on the seating portion 102 and on the seat back 104.

When the driver is sitting on the left-hand portion of the seat 100, the driving position is defined by the two left armrests 106 and 110. The remaining portion of the seat can form, depending on the position of the right middle armrest 112, one or two seats for the passengers, if necessary separated by the armrest 112. Similarly, when the driver is sitting on the right-hand portion of the seat 100, the driving position is defined by the two right armrest 108 and 112. When, on the other hand, the driver is sitting on the middle portion of the seat 100, the driving position is defined by the two middle armrests 110 and 112, which thus ensure good lateral restraint for the driver's body.

Advantageously, each armrest has a respective actuator device (per-se-known and not shown) associated thereto for bringing about the transverse movement of the armrest based on the commands imparted by the user, for example by means of specific push-buttons 116 provided on the armrest.

In a variant of construction of the seat, not shown, the two side armrests can be fixed at the two ends of the seat instead of being transversely movable.

Naturally, the principle of the invention remaining unchanged, embodiments and manufacturing details may vary widely from those described and illustrated purely by way of non-limiting example.

## Claims

1. A control unit (10) for a motor vehicle comprising a support body (22) adjustable in the transverse direction of the motor vehicle, a first actuator (40) for controlling the transverse adjustment movement of the support body (22), as well as a steering wheel (14) and a pedal assembly (16) both carried by the support body (22),
**characterized in that** the steering wheel (14) is adjustable both in the direction of its own axis and in the vertical direction, **in that** the pedal assembly (16) is adjustable in the longitudinal direction, and **in that** the control unit (10) further comprises a second and a third actuator (42, 44) for controlling the axial and vertical adjustment movements of the steering wheel (14), respectively, and a fourth actuator (52) for controlling the longitudinal adjustment movement of the pedal assembly (16).

2. A control unit according to Claim 1, wherein the support body (22) is arranged to slide along a cross-bar (24) mounted on a dashboard (22) of the motor vehicle.

3. A control unit according to Claim 2, further comprising a mechanism including a worm (37) operable by the first actuator (40) and a nut screw (38) attached to the support body (22).

4. A control unit according to any of the preceding claims, further comprising a support arm (46) for supporting the pedal assembly (16), wherein the support arm (46) is articulated (50) to the support body (22) so as to tilt about a transverse axis.

## Patentansprüche

1. Steuereinheit (10) für ein Kraftfahrzeug mit einem Trägerkörper (22), der in der Querrichtung des Kraftfahrzeugs einstellbar ist, einem ersten Stellglied (40) zum Steuern der Quereinstellbewegung des Trägerkörpers (22), sowie einem Lenkrad (14) und einer Pedalanordnung (16), die beide durch den Trägerkörper (22) getragen werden,
**dadurch gekennzeichnet, dass** das Lenkrad (14) sowohl in der Richtung seiner eigenen Achse als auch in der vertikalen Richtung einstellbar ist und dass die Pedalanordnung (16) in der Längsrichtung einstellbar ist, und dass die Steuereinheit (10) ferner ein zweites und ein drittes Stellglied (42, 44) zum Steuern der Bewegungen der axialen bzw. vertikalen Einstellung des Lenkrades (14) und ein viertes Stellglied (52) zum Steuern der Längseinstellbewegung der Pedalanordnung (16) umfasst.

2. Steuereinheit nach Anspruch 1, wobei der Trägerkörper (22) so angeordnet ist, dass er entlang eines Querbalkens (24) gleitet, der an einem Armaturenbrett (22) des Kraftfahrzeugs montiert ist.

3. Steuereinheit nach Anspruch 2, welche ferner einen Mechanismus mit einer Schnecke (37), die durch das erste Stellglied (40) betätigbar ist, und einer Schraubenmutter (38), die am Trägerkörper (22) angebracht ist, umfasst.

4. Steuereinheit nach einem der vorangehenden Ansprüche, welche ferner einen Stützarm (46) zum Abstützen der Pedalanordnung (16) umfasst, wobei der Stützarm (46) am Trägerkörper (22) so gelenkig gelagert (50) ist, dass er sich um eine Querachse neigt.

## Revendications

1. Unité de commande (10) pour un véhicule à moteur comprenant un corps de support (22) réglable dans la direction transversale du véhicule à moteur, un premier actionneur (40) pour commander le mouvement de réglage transversal du corps de support (22), ainsi qu'un volant de direction (14) et un pédalier (16) tous deux supportés par le corps de support (22),
**caractérisé en ce que** le volant de direction (14) est réglable à la fois dans la direction de son propre axe et dans la direction verticale, **en ce que** le pédalier (16) est réglable dans la direction longitudinale, et **en ce que** l'unité de commande (10) comprend en outre un deuxième et un troisième actionneurs (42,44) pour commander respectivement les mouvements de réglage axial et vertical du volant de direction (14), respectivement, et un quatrième actionneur (52) pour commander le mouvement de réglage longitudinal du pédalier (16).

2. Unité de commande selon la revendication 1, dans laquelle le corps de support (22) est agencé de manière à coulisser le long d'une traverse (24) montée sur un tableau de bord (22) du véhicule à moteur.

3. Unité de commande selon la revendication 2, comprenant en outre un mécanisme incluant une vis sans fin (37) pouvant être actionnée par le premier actionneur (40) et un écrou (3 8) fixé sur le corps de support (22).

4. Unité de commande selon l'une quelconque des revendications précédentes, comprenant en outre un bras de support (46) pour supporter le pédalier (16), dans laquelle le bras de support (46) est articulé (50) sur le corps de support (22) afin de basculer autour d'un axe transversal.
